# EUROPEAN PATENT SPECIFICATION

(11) **EP 4 497 527 B1**
(45) Date of publication and mention of the grant of the patent: **01.07.2026**
(21) Application number: 24178124.4
(22) Date of filing: 26.05.2024
(51) Int. Cl.: B23K 26/14, B23K 26/082, B23K 26/364

(54) **LASER PROCESSING APPARATUS**
LASERBEARBEITUNGSVORRICHTUNG
APPAREIL DE TRAITEMENT AU LASER

(30) Priority: 31.05.2023 JP 2023089555
(43) Date of publication of application: 29.01.2025
(73) Proprietor: DAIHEN Corporation, Yodogawa-ku Osaka-shi, Osaka 532-8512 (JP)
(72) Inventor: TAMAKI, Ryoji, Osaka, 532-8512 (JP)
(74) Representative: Zacco GmbH

(56) References cited:
- CN-A- 110 842 359
- CN-A- 115 415 681
- JP-A- H0 481 290

## Description

### BACKGROUND OF THE INVENTION

### Field of the Invention

The present disclosure relates to a laser processing apparatus, and more particularly to the technique of removing a spatter in a laser processing apparatus.

### Description of the Background Art

There is known a laser processing apparatus that forms a processing groove in a workpiece by using a laser beam. Japanese Patent No. 7081050 discloses the technique of reducing an influence of heat by removing a plume (hot steam) generated when a workpiece made of carbon fiber reinforced plastics (CFRP) is subjected to laser processing. In the technique disclosed in Japanese Patent No. 7081050, a plume in a range of laser-beam irradiation is efficiently removed by subjecting a nozzle portion to fine processing (such as, for example, changing a cross-sectional shape for each of a plurality of flow paths of the nozzle portion) to change a flow velocity of an injected gas depending on the position.

CN 110 842 359 A discloses a laser welding device which includes an air conditioner, a cold air pipe, a protective air gun, laser head, a connection device and a gas flow adjustment system. The gas flow adjustment system includes a controller and a temperature sensor. The temperature sensor is arranged on the welding workpiece to collect temperature parameters. An arc-shaped slide rail allows a rotation of the air gun within a rotation range of 30° with respect to the laser head.

CN 115 415 681 A discloses a medium flow supply assembly and an ultrasonic jet coupling assembly. The medium flow supply assembly has an output end for outputting supercritical carbon dioxide fluid. The ultrasonic jet coupling assembly includes a jet nozzle and an ultrasonic transducer device.

JP H04 81290 A, on which the preamble of claim 1 is based, discloses a laser processing nozzle provided with a supply port for an inert gas such as argon, from which the inert gas is introduced and injected from the nozzle tip toward the welding portion to perform welding. In order to remove such a plasma from the optical path of laser beam, an inert gas such as argon is injected into the welded portion with a cylindrical straight tube portion connected to the end of a conduit

### SUMMARY OF THE INVENTION

When metal is used in a workpiece, a spatter, which is molten metal, may be generated in a processing groove as a result of formation of the processing groove by laser processing. Unlike a plume, the spatter is heavy, and thus, the spatter may be accumulated in the processing groove. The generation of the spatter leads to a deterioration of quality in welding. For example, in such dissimilar material welding that a molten resin enters a processing groove to weld the metal and the resin, a spatter adheres to the processing groove and solidifies, which causes a decrease in welding strength. Although the technique disclosed in Japanese Patent No. 7081050 can achieve efficient removal of a plume, the generation of a spatter having a large volume is not taken into consideration, and thus, it is difficult to appropriately blow off the spatter.

An object of the present disclosure is to provide a laser processing apparatus capable of appropriately blowing off a spatter generated by laser processing.

A laser processing apparatus according to the present disclosure includes: a laser-beam irradiation device that forms a processing groove in a workpiece by subjecting the workpiece to laser processing while scanning a surface of the workpiece; an injection device that injects a gas in a range of laser-beam irradiation by the laser-beam irradiation device; an actuator that changes a position of injection of the gas by the injection device; a controller; and a sensor that detects a position of irradiation by the laser-beam irradiation device. The controller calculates a next position of irradiation from an actual position of irradiation by the laser-beam irradiation device based on an output value of the sensor and controls the actuator such that the gas is injected so as to follow the laser-beam irradiation, thereby changing the position of injection of the gas by the injection device.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram schematically showing a configuration of a laser processing apparatus according to the present disclosure.
Fig. 2 is a diagram for illustrating injection of a gas by a nozzle.
Fig. 3 is a flowchart showing the contents of control performed by a controller.

### DESCRIPTION OF THE PREFERRED EMBODIMENTS

An embodiment of the present disclosure will be described in detail hereinafter with reference to the drawings, in which the same or corresponding portions are denoted by the same reference characters and description thereof will not be repeated.

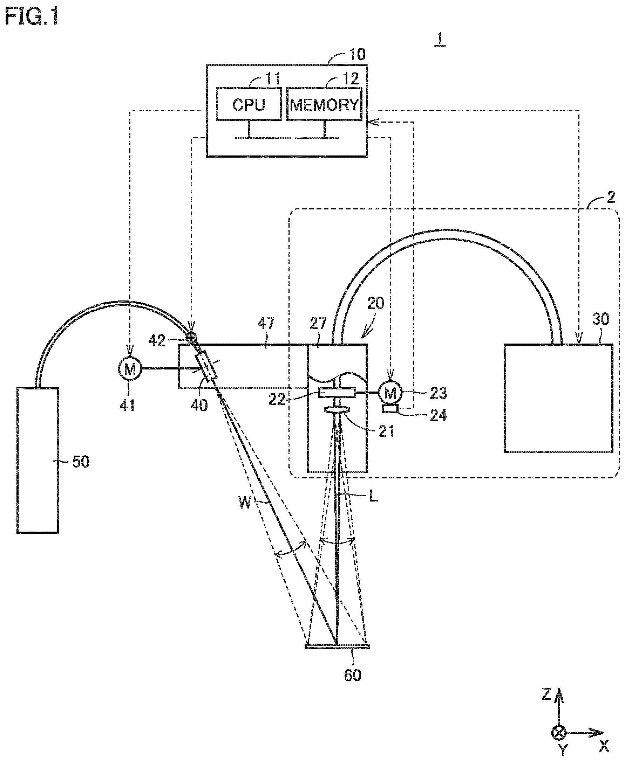

Fig. 1 is a diagram schematically showing a configuration of a laser processing apparatus 1 according to the present disclosure. Laser processing apparatus 1 includes a laser-beam irradiation device 2, a nozzle 40, a motor 41, and a controller 10. Laser-beam irradiation device 2 is a device for subjecting a workpiece 60 placed on a notshown table to laser processing. Laser-beam irradiation device 2 includes a galvano scanner 20 and a laser oscillation device 30. The coordinate axes in Fig. 1 correspond to an X axis, a Y axis and a Z axis.

Galvano scanner 20 includes a lens 21, a scan mirror 22, a motor 23, an encoder 24, and a main body portion 27. Scan mirror 22 reflects a laser beam L received from laser oscillation device 30, and outputs laser beam L to lens 21. Scan mirror 22 is configured such that the orientation thereof can be changed by motor 23 serving as an actuator, and can change a position of irradiation with laser beam L emitted through lens 21. Scan mirror 22 includes, for example, an X scan mirror that can change the position of irradiation in the X direction, and a Y scan mirror that can change the position of irradiation in the Y direction.

Motor 23 is implemented by, for example, a servo motor, and includes an X-axis motor that rotationally drives the X scan mirror, and a Y-axis motor that rotationally drives the Y scan mirror. Encoder 24 serving as a sensor that detects a rotation position is connected to motor 23. Although galvano scanner 20 has lens 21, scan mirror 22, motor 23, and encoder 24 built into main body portion 27, motor 23 and encoder 24 are shown outside main body portion 27 in the figure. As shown in Fig. 1, galvano scanner 20 forms a processing groove in workpiece 60 by scanning laser beam L on an X-Y plane of workpiece 60.

Nozzle 40 functions as an injection device that injects a gas W, and is connected to a cylinder 50 serving as a source of gas W through a flow rate adjustment valve 42 serving as an adjustment mechanism that adjusts a flow velocity of gas W. The source of gas W may be a device other than cylinder 50, and may be any device as long as it can supply gas W. Cylinder 50 is filled with the compressed air, for example. Gas W may be a gas other than the air, and may be, for example, an inert gas such as argon.

Flow rate adjustment valve 42 has such a structure that a degree of opening is changeable. Flow rate adjustment valve 42 adjusts a flow rate of gas W supplied from cylinder 50, based on a signal provided from controller 10. Flow rate adjustment valve 42 is implemented by, for example, a valve, a solenoid valve or the like whose degree of opening is adjustable. Nozzle 40 is connected to motor 41 serving as an actuator.

Motor 41 is implemented by, for example, a stepping motor. Motor 41 may be implemented by a servo motor. Nozzle 40 and motor 41 are fixed to a support portion 47. Support portion 47 is connected to main body portion 27 of galvano scanner 20. Support portion 47 is connected to a tip of a robot arm, for example.

Controller 10 is configured to include a central processing unit (CPU) 11, a memory 12 (a read only memory (ROM) and a random access memory (RAM)), a notshown input/output device for inputting/outputting various signals, and the like. CPU 11 loads a program stored in the ROM into the RAM or the like and executes the program. The program stored in the ROM is a program describing a procedure of a process executed by controller 10. Controller 10 controls each device in accordance with these programs. This control is not limited to processing by software but may be processed by dedicated hardware (electronic circuitry).

Controller 10 controls laser oscillation device 30 to emit laser beam L to galvano scanner 20. Controller 10 controls motor 23 to change an angle of reflection by scan mirror 22. Controller 10 controls motor 41 to change a position of nozzle 40. Controller 10 controls flow rate adjustment valve 42 to adjust the flow rate of gas W, thereby adjusting the flow velocity of gas W injected from nozzle 40.

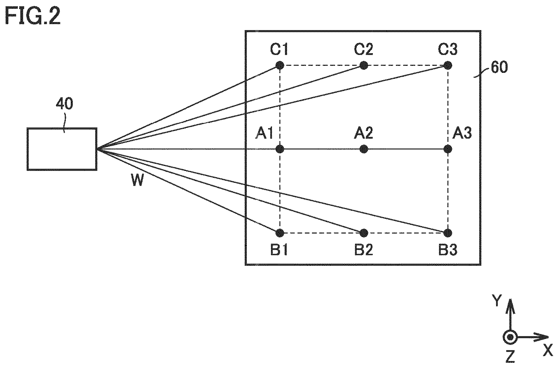

Next, injection of gas W by nozzle 40 will be described. Fig. 2 is a diagram for illustrating injection of the gas by nozzle 40. Nozzle 40 can inject gas W on the X-Y plane of workpiece 60. Controller 10 specifies the position of irradiation with laser beam L based on a signal provided from encoder 24. Controller 10 controls motor 41 in accordance with the specified position of irradiation, thereby changing the position of injection of gas W by nozzle 40.

Position data about the position of injection of gas W corresponding to the position of irradiation by laser-beam irradiation device 2 is stored in memory 12. As shown in Fig. 2, position data about each of positions A1 to A3, B1 to B3 and C1 to C3 on workpiece 60 is stored in memory 12 as one example of the position data. Controller 10 controls motor 41 based on the position data, thereby changing the position of nozzle 40 into a position corresponding to the position of irradiation with laser beam L.

Controller 10 can change the flow velocity of gas W, in addition to the position of injection. Controller 10 specifies the position of irradiation with laser beam L based on a signal provided from encoder 24. Controller 10 controls flow rate adjustment valve 42 in accordance with the specified position of irradiation, thereby changing the flow velocity of gas W in nozzle 40.

Flow velocity data about the flow velocity of gas W corresponding to the position of irradiation by laser-beam irradiation device 2 is stored in memory 12. As shown in Fig. 2, flow velocity data about each of positions A1 to A3, B1 to B3 and C1 to C3 on workpiece 60 is stored in memory 12 as one example of the flow velocity data. For example, a distance from nozzle 40 becomes longer in the order of A1<A2<A3. Controller 10 makes the flow velocity lower as the position becomes closer, and makes the flow velocity higher as the position becomes farther. Controller 10 controls flow rate adjustment valve 42 based on the flow velocity data, thereby changing the flow velocity of gas W injected from nozzle 40 in accordance with the position of irradiation with laser beam L.

When processing grooves are formed at positions A1, A2 and A3 by laser beam L, controller 10 changes the position of injection of gas W by nozzle 40 to correspond to each position, and control flow rate adjustment valve 42 such that the flow velocity becomes higher in the order of position A1<A2<A3. When processing grooves are formed at positions B1, B2 and B3 by laser beam L, controller 10 changes the position of injection of gas W by nozzle 40 to correspond to each position, and control flow rate adjustment valve 42 such that the flow velocity becomes higher in the order of position B1<B2<B3. When processing grooves are formed at positions C1, C2 and C3 by laser beam L, controller 10 changes the position of injection of gas W by nozzle 40 to correspond to each position, and control flow rate adjustment valve 42 such that the flow velocity becomes higher in the order of position C1<C2<C3.

As shown in Fig. 2, controller 10 changes the position of injection of gas W by nozzle 40 in accordance with the position of irradiation with laser beam L, and thus, gas W can be injected to an appropriate position corresponding to scanning of laser beam L. Controller 10 can change the flow velocity of gas W in nozzle 40 in accordance with the position of irradiation with laser beam L. Specifically, controller 10 makes the flow velocity lower at a point where a distance between nozzle 40 and laser beam L is short than at a point where the distance is long, and makes the flow velocity higher at the point where the distance between nozzle 40 and laser beam L is long than at the point where the distance is short. By doing so, gas W can be injected to the processing groove at constant intensity, and thus, a spatter having a large volume can be appropriately blown off from the processing groove at any position.

If nozzle 40 is fixed, it is conceivable that the intensity of gas W may vary depending on the position where the processing groove is formed. In contrast, in laser processing apparatus 1, nozzle 40 is controlled as described above, such that gas W can be injected at constant intensity to the position corresponding to scanning of laser beam L. As a result, a large-volume spatter generated in the processing groove by irradiation with laser beam L can be appropriately blown off.

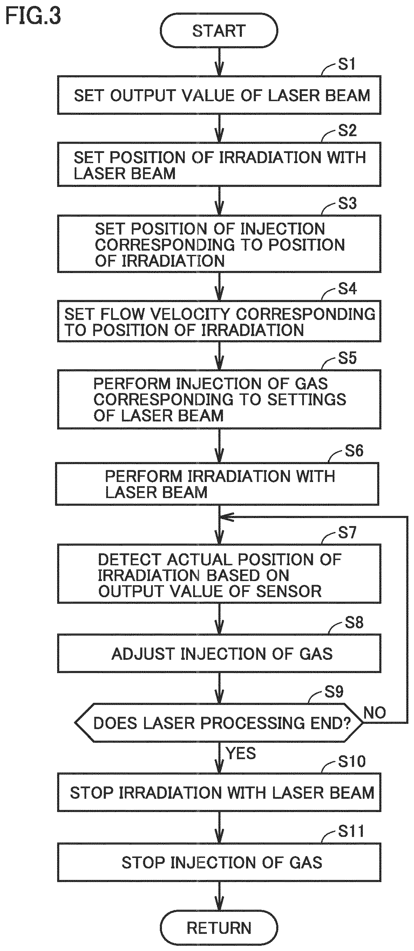

Next, the contents of control performed by controller 10 will be described. Fig. 3 is a flowchart showing the contents of control performed by controller 10. The process of the flowchart in Fig. 3 is repeatedly invoked and executed as a subroutine from a main routine in the control by controller 10. First, in step S (hereinafter, simply denoted as "S") 1, controller 10 executes the processing of setting, in laser oscillation device 30, an output value of laser beam L corresponding to a processing groove formed in workpiece 60.

Next, controller 10 executes the processing of setting, in laser oscillation device 30, a position of irradiation with laser beam L corresponding to the processing groove formed in workpiece 60 (S2). For example, controller 10 transmits, to laser oscillation device 30, data indicating how to form the processing groove in workpiece 60. Next, controller 10 sets a position of injection of gas W corresponding to the position of irradiation with laser beam L (S3). Specifically, controller 10 makes the setting such that motor 41 is driven based on injection data about the position of injection of gas W corresponding to the position of irradiation by laser-beam irradiation device 2.

Next, controller 10 sets a flow velocity of gas W corresponding to the position of irradiation with laser beam L (S4). Specifically, controller 10 makes the setting such that a flow rate of gas W is changed by flow rate adjustment valve 42 based on flow velocity data about the flow velocity of gas W corresponding to the position of irradiation by laser-beam irradiation device 2.

Next, based on the settings in S3 and S4, controller 10 performs injection of gas W corresponding to the settings of laser beam L (S5). Next, controller 10 performs irradiation of workpiece 60 with laser beam L by laser-beam irradiation device 2 (S6). Next, controller 10 detects an actual position of irradiation with laser beam L in workpiece 60 based on an output value of encoder 24 serving as a sensor (S7).

Next, based on the actual position of irradiation with laser beam L in S7, controller 10 controls nozzle 40 to adjust the injection of gas W such that gas W is injected at appropriate position and flow velocity that allow removal of a spatter from the processing groove (S8). In the processing in S8, controller 10 calculates a position of next irradiation based on the actual position of irradiation when detecting the actual position of irradiation with laser beam L, and performs an adjustment such that injection of gas W is followed by irradiation with laser beam L without delay. As a result, controller 10 can suitably perform the injection of gas W so as to follow scanning of laser beam L. Next, controller 10 determines whether laser processing ends (S9). When controller 10 determines that laser processing does not end in S9 (NO in S9), controller 10 repeats the processing in S7 and the subsequent steps. When controller 10 determines that laser processing ends (YES in S9), controller 10 stops the irradiation with laser beam L (S10). Next, controller 10 stops the injection of gas W (S11) and returns the process from the subroutine to the main routine.

### <Modifications>

Not according to the present invention, controller 10 10 may perform the injection of gas W based on a temporarily set position of irradiation with laser beam L, not based on the detection of the position of irradiation with laser beam L. That is, after temporarily setting data about the position of injection and the flow velocity of the gas in accordance with the predetermined position of irradiation with the laser beam, controller 10 may perform injection in accordance with the data until laser processing ends.

The position of irradiation with laser beam L may be detected based on an image taken by a camera, not by encoder 24. Specifically, controller 10 may specify a high-brightness position in the taken image as the position of irradiation with laser beam L, and perform injection of gas W in accordance with the specified position of irradiation with laser beam L.

Nozzle 40 may be implemented by a Laval nozzle. The Laval nozzle has such a structure that a width becomes narrower from an entrance portion to a central portion and again becomes wider at an exit portion. The Laval nozzle can inject a gas having a linearly traveling property at high velocity.

In laser processing apparatus 1 according to the present invention, the position of injection of gas W by nozzle 40 is changed in accordance with the position of irradiation with laser beam L, and thus, gas W can be injected to an appropriate position corresponding to scanning of laser beam L. In laser processing apparatus 1, the flow velocity of gas W in nozzle 40 can be changed in accordance with the position of irradiation with laser beam L, and thus, gas W can be injected at an appropriate flow velocity to the position corresponding to scanning of laser beam L.

While the embodiment of the present disclosure has been described, it should be understood that the embodiment disclosed herein is illustrative and non-restrictive in every respect. The scope of the present disclosure is defined by the terms of the appended claims.

## Claims

1. A laser processing apparatus (1) comprising:
a laser-beam irradiation device (2) that forms a processing groove in a workpiece (60) by subjecting the workpiece (60) to laser processing while scanning a surface of the workpiece (60);
an injection device (40) that injects a gas (W) in a range of laser-beam irradiation by the laser-beam irradiation device (2);
an actuator (41) that changes a position of injection of the gas (W) by the injection device (40);
**characterised in that** it comprises:
a controller (10); and
a sensor (24) that detects a position of irradiation by the laser-beam irradiation device (2), wherein
the controller (10) calculates a next position of irradiation from an actual position of irradiation by the laser-beam irradiation device (2) based on an output value of the sensor (24) and controls the actuator (41) such that the gas (W) is injected so as to follow the laser-beam irradiation, thereby changing the position of injection of the gas (W) by the injection device (40).

2. The laser processing apparatus (1) according to claim 1, further comprising
an adjustment mechanism (42) that changes a flow velocity of the gas (W) injected from the injection device (40), wherein
the controller (10) controls the adjustment mechanism (42) in accordance with the position of irradiation by the laser-beam irradiation device (2), thereby changing the flow velocity of the gas (W) in the injection device (40).

3. The laser processing apparatus (1) according to claim 1, further comprising a storage device (12), wherein
the storage device (12) stores first data about the position of injection of the gas (W) corresponding to the position of irradiation by the laser-beam irradiation device (2), and
the controller (10) controls the actuator (41) based on the first data.

4. The laser processing apparatus (1) according to claim 2, further comprising a storage device (12), wherein
the storage device (12) stores second data about the flow velocity of the gas (W) corresponding to the position of irradiation by the laser-beam irradiation device (2), and
the controller (10) controls the adjustment mechanism (42) based on the second data.

## Patentansprüche

1. Laserbearbeitungseinrichtung (1), umfassend:
eine Laserstrahl-Bestrahlungsvorrichtung (2), die eine Bearbeitungsrinne in einem Werkstück (60) bildet, indem das Werkstück (60) einer Laserbearbeitung unterzogen wird, während eine Oberfläche des Werkstücks (60) abgetastet wird;
eine Injektionsvorrichtung (40), die ein Gas (W) in einem Bereich der Laserstrahl-Bestrahlung durch die Laserstrahl-Bestrahlungsvorrichtung (2) injiziert;
einen Aktuator (41), der eine Position der Injektion des Gases (W) durch die Injektionsvorrichtung (40) verändert;
**gekennzeichnet dadurch, dass** sie umfasst:
eine Steuerung (10); und
einen Sensor (24), der eine Position der Bestrahlung durch die Laserstrahl-Bestrahlungsvorrichtung (2) detektiert, wobei die Steuerung (10) eine nächste Bestrahlungsposition aus einer tatsächlichen Bestrahlungsposition durch die Laserstrahl-Bestrahlungsvorrichtung (2) basierend auf einem Ausgangswert des Sensors (24) berechnet und den Aktuator (41) steuert, sodass das Gas (W) injiziert wird, um der Laserstrahl-Bestrahlung zu folgen, wodurch die Position der Injektion des Gases (W) durch die Injektionsvorrichtung (40) verändert wird.

2. Laserbearbeitungseinrichtung (1) nach Anspruch 1, ferner umfassend:
einen Einstellmechanismus (42), der eine Fließgeschwindigkeit des von der Injektionsvorrichtung (40) injizierten Gases (W) verändert, wobei
die Steuerung (10) den Einstellmechanismus (42) in Übereinstimmung mit der Bestrahlungsposition durch die Laserstrahl-Bestrahlungsvorrichtung (2) steuert, wodurch die Fließgeschwindigkeit des Gases (W) in der Injektionsvorrichtung (40) verändert wird.

3. Laserbearbeitungseinrichtung (1) nach Anspruch 1, ferner umfassend:
eine Speichervorrichtung (12), wobei
die Speichervorrichtung (12) erste Daten über die Position der Injektion des Gases (W) speichert, die der Bestrahlungsposition durch die Laserstrahl-Bestrahlungsvorrichtung (2) entsprechen, und
die Steuerung (10) den Aktuator (41) basierend auf den ersten Daten steuert.

4. Laserbearbeitungseinrichtung (1) nach Anspruch 2, ferner umfassend:
eine Speichervorrichtung (12), wobei
die Speichervorrichtung (12) zweite Daten über die Fließgeschwindigkeit des Gases (W) speichert, die der Bestrahlungsposition durch die Laserstrahl-Bestrahlungsvorrichtung (2) entsprechen, und
die Steuerung (10) den Einstellmechanismus (42) basierend auf den zweiten Daten steuert.

## Revendications

1. Appareil de traitement au laser (1) comprenant :
un dispositif d'irradiation par faisceau laser (2) qui forme une rainure de traitement dans une pièce à travailler (60) en soumettant la pièce à travailler (60) à un traitement au laser tout en balayant une surface de la pièce à travailler (60) ;
un dispositif d'injection (40) qui injecte un gaz (W) dans une plage d'irradiation par faisceau laser par le dispositif d'irradiation par faisceau laser (2) ;
un actionneur (41) qui change une position d'injection du gaz (W) par le dispositif d'injection (40) ;
**caractérisé en ce qu'**il comprend :
une unité de commande (10) ; et
un capteur (24) qui détecte une position d'irradiation par le dispositif d'irradiation par faisceau laser (2), dans lequel l'unité de commande (10) calcule une position d'irradiation suivante à partir d'une position d'irradiation réelle par le dispositif d'irradiation par faisceau laser (2) sur la base d'une valeur de sortie du capteur (24) et commande l'actionneur (41) de telle sorte que le gaz (W) soit injecté de manière à suivre l'irradiation par faisceau laser, changeant ainsi la position d'injection du gaz (W) par le dispositif d'injection (40).

2. Appareil de traitement au laser (1) selon la revendication 1, comprenant en outre
un mécanisme de réglage (42) qui change une vitesse d'écoulement du gaz (W) injecté à partir du dispositif d'injection (40), dans lequel
l'unité de commande (10) commande le mécanisme de réglage (42) conformément à la position d'irradiation par le dispositif d'irradiation par faisceau laser (2), changeant ainsi la vitesse d'écoulement du gaz (W) dans le dispositif d'injection (40).

3. Appareil de traitement au laser (1) selon la revendication 1, comprenant en outre
un dispositif de stockage (12), dans lequel
le dispositif de stockage (12) stocke des premières données concernant la position d'injection du gaz (W) correspondant à la position d'irradiation par le dispositif d'irradiation par faisceau laser (2), et
l'unité de commande (10) commande l'actionneur (41) sur la base des premières données.

4. Appareil de traitement au laser (1) selon la revendication 2, comprenant en outre
un dispositif de stockage (12), dans lequel
le dispositif de stockage (12) stocke des deuxièmes données concernant la vitesse d'écoulement du gaz (W) correspondant à la position d'irradiation par le dispositif d'irradiation par faisceau laser (2), et
l'unité de commande (10) commande le mécanisme de réglage (42) sur la base des deuxièmes données.
